# EUROPEAN PATENT SPECIFICATION

(11) **EP 4 458 521 B1**
(45) Date of publication and mention of the grant of the patent: **11.03.2026**
(21) Application number: 22920701.4
(22) Date of filing: 11.01.2022
(51) Int. Cl.: B25J 9/06, B25J 17/00, B25J 19/00

(54) **ROBOT**
ROBOTER
ROBOT

(43) Date of publication of application: 06.11.2024
(73) Proprietor: LG Electronics Inc., Yeongdeungpo-gu Seoul 07336 (KR)
(72) Inventor: LEE, Sanghun, Seoul 06772 (KR)
(74) Representative: Schornack, Oliver
(86) International application number: PCT/KR2022/000466
(87) International publication number: WO 2023/136368

(56) References cited:
- WO-A1-2020/192862
- CN-A- 109 093 643
- CN-A- 112 372 672
- CN-B- 111 805 573
- JP-A- 2008 055 560
- JP-A- 2011 125 946
- JP-A- 2018 034 268
- JP-B2- 2 513 823
- KR-A- 20150 088 832
- US-A1- 2020 086 507
- US-B2- 9 399 301

## Description

### [Technical Field]

The present disclosure relates to a robot, and more particularly, to a robot that can improve the durability of co-robot (cobot) such as convenience of assembly and a dust and moisture proof.

### [Background Art]

A robot refers to a machine that has the ability to work on its own. Robots have played a large part in production automation and have evolved into intelligent robots until recently. An intelligent robot refers to a robot that recognizes the external environment, judges the situation, and autonomously executes necessary tasks.

Intelligent robots can be broadly divided into industrial robots and service robots. Unlike existing industrial robots that perform work in an environment isolated from humans, co-robots can assist or replace human work in the same space as humans. These co-robots are increasing productivity by physically interacting with humans and performing tasks in the same space as humans. Service robots are improving the convenience of human life by providing various services in social infrastructure.

Recently, much research has been conducted on these intelligent robots. Documents WO2020/192862A1 and CN109093643A disclose examples of joints used in robotic arms.

### [Disclosure]

### [Technical Problem]

An object of the present disclosure is to solve the above-described problems and other problems.

Another object may be to provide a robot that facilitates the joining of multi-joint arms.

Another object may be to provide a robot that can improve the durability of multi-joint arms.

Another object may be to provide a robot that can improve the dust-proof and moisture-proof structure of multi-joint arms.

### [Technical Solution]

According to an aspect of the present disclosure to achieve the above-described object, there is provided a robot including: a first arm; a second arm configured to be rotatably joined to the first arm; a sealing member configured to be located between the first arm and the second arm; and a joint block configured to cover the sealing member, and join the first arm to the second arm.

### [Advantageous Effects]

The effects of the robot according to the present disclosure will be described as follows.

According to at least one of the embodiments of the present disclosure, a robot that facilitates the joining of multi-joint arms can be provided.

According to at least one of the embodiments of the present disclosure, a robot that can improve the durability of multi-joint arms can be provided.

According to at least one of the embodiments of the present disclosure, a robot that can improve the dust-proof and moisture-proof structure of multi-joint arms can be provided.

Further scope of applicability of the present disclosure will become apparent from the following detailed description. However, it should be understood that the detailed description and specific embodiments such as preferred embodiments of the present disclosure are given by way of illustration only, since various changes and modifications within the scope of the present disclosure may be clearly understood by those skilled in the art.

### [Description of Drawings]

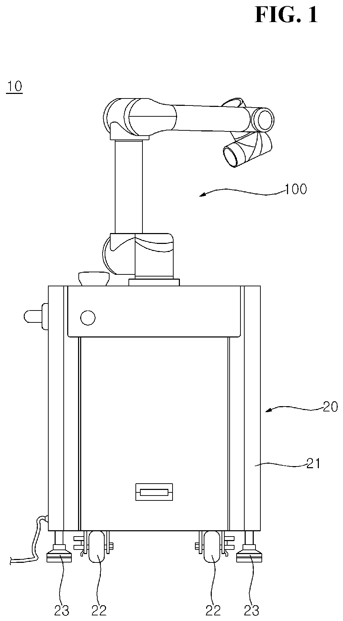

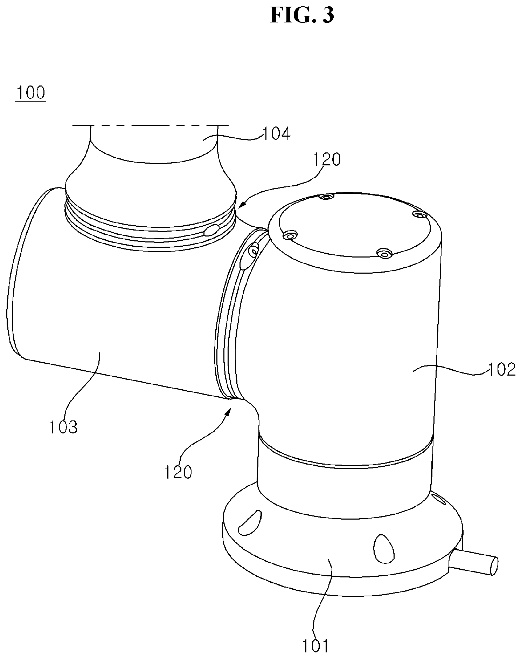

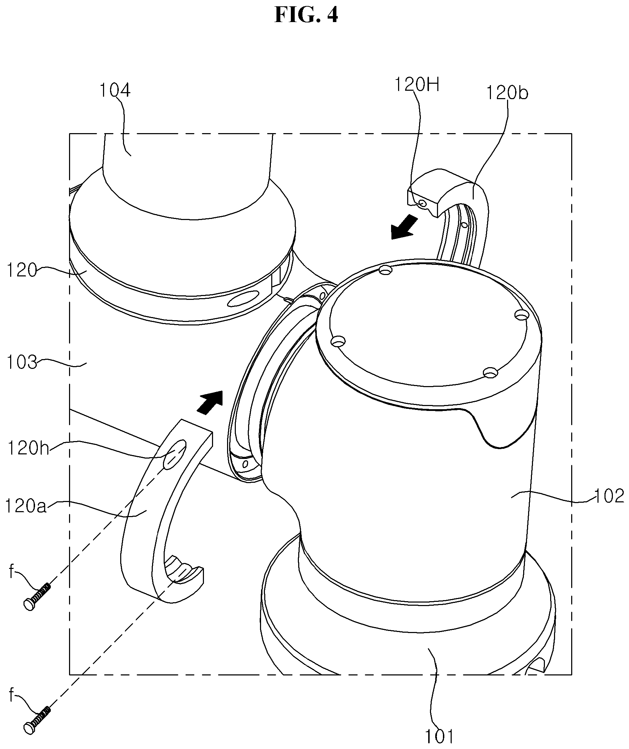

FIGS. 1 to 15 are diagrams showing examples of a robot according to embodiments of the present disclosure.

### [Mode for Invention]

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

Although an embodiment is described with reference to a specific drawing, if necessary, reference numerals not appearing in the specific drawing may be mentioned, and reference numerals not appearing in the specific drawing shall be used when the reference numerals appear in the other figures.

Referring to FIG. 1, a robot 10 may include a moving cart 20 and a robot arm 100. The robot arm 100 may be mounted on the moving cart 20. The robot arm 100 may be a multi-joint arm 100. The moving cart 20 can provide a coordinate to the robot arm 100, and the robot arm 100 can move in the coordinate provided by the moving cart 20.

The moving cart 20 may include a cabinet 21 and a wheel 22. The cabinet 21 may provide an accommodating space therein. The robot arm 100 may be rotatably mounted on the cabinet 21. The wheel 22 may be installed on the lower surface of the cabinet 21. The wheel 22 allows the cabinet 21 to move freely.

A foot 23 may be installed on the lower surface of the cabinet 21 while being adjacent to the wheel 22. The foot 23 may restrict the movement of the cabinet 21. The foot 23 can move in the vertical direction of the cabinet 21. The foot 23 may be stored inside the cabinet 21, move to the outside of the cabinet 21, and becomes longer. When the foot 23 becomes longer, the movement of the cabinet 21 may be restricted and the cabinet 21 may be fixed to a floor.

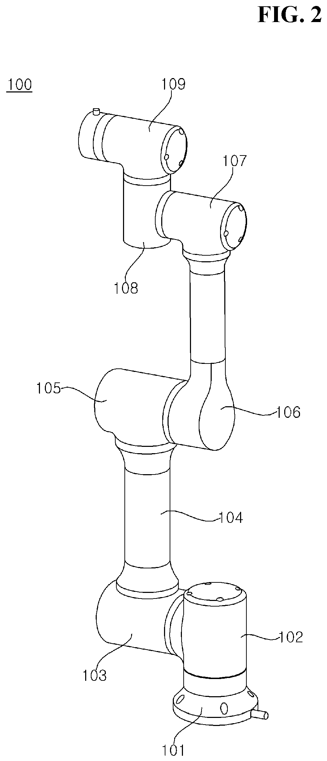

Referring to FIGS. 2 to 4, the robot arm 100 may include a first arm 101, a second arm 102, and a third arm 103. The first arm 101 may be referred to as a mount base 101. The first arm 101 may be rotatably mounted on the upper side of the moving cart 20 (see FIG. 1). The second arm 102 may be rotatably joined to the first arm 101. The third arm 103 may be rotatably joined to the second arm 102. The rotation axis of the third arm 103 may intersect the rotation axis of the second arm 102.

The robot arm 100 may further include a fourth arm 104. The fourth arm 104 may be rotatably joined to the third arm 103. The rotation axis of the fourth arm 104 may intersect the rotation axis of the third arm 103. The rotation axis of the fourth arm 104 may be parallel to the rotation axis of the second arm 102.

The robot arm 100 may include a fifth arm 105, a sixth arm 106, a seventh arm 107, an eighth arm 108, and a ninth arm 109. The number of arms included in the robot arm 100 is not limited thereto.

The third arm 103 may be joined to the second arm 102 by a joint block 120 and rotate with respect to the second arm 102. The fourth arm 104 may be joined to the third arm 103 by the joint block 120 and rotate with respect to the third arm 103.

The joint block 120 may include a coupling hole 120h, 120H. The joint block 120 may include a first part 120a and a second part 120b. For example, the joint block 120 may have a ring shape. For another example, the first part 120a may have a semicircular shape, and the second part 120b may have a semicircular shape corresponding to the first part 120a. The first part 120a may have a first coupling hole 120h. The first coupling hole 120h may be formed while obliquely penetrating the outer circumferential surface of the first part 120a. The second part 120b may have a second coupling hole 120H. The second coupling hole 120H may be formed at the distal end surface of the second part 120b. The fastening member f may be inserted into the first coupling hole 120h and fitted into the second coupling hole 120H to couple the first part 120a and the second part 120b.

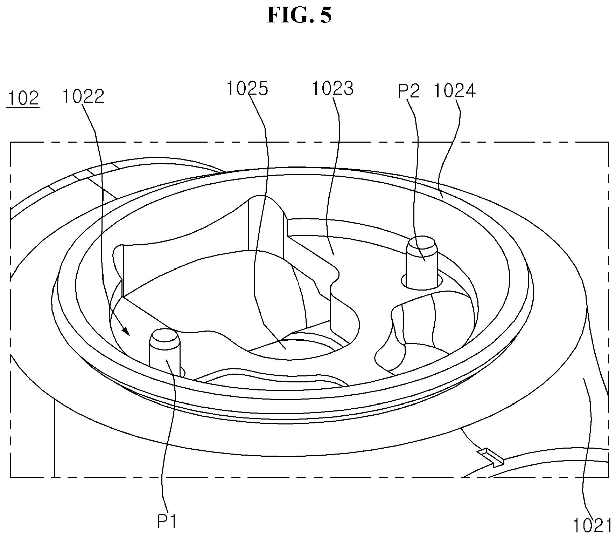

Referring to FIG. 5, the second arm 102 may include a housing 1021 and a connecting mount 1022. The housing 1021 may provide an accommodating space therein and form the outer surface of the second arm 102. The connecting mount 1022 may be inserted into one side opening of the housing 1021. The connecting mount 1022 may include a bottom portion 1023, a flange 1024, a pin P1, P2, and a cable hole 1025. The cable hole 1025 may be formed by penetrating the bottom portion 1023 at the center of the bottom portion 1023.

There may be a plurality of pins P1 and P2. The pin P1, P2 may be referred to as a fixing pin P1, P2 or a guide pin P1, P2. The plurality of pins P1 and P2 may include a first pin P1 and a second pin P2. The first pin P1 may be formed as a pillar that protrudes and extends from the bottom portion 1023 while being adjacent to the cable hole 1025. The second pin P2 may be formed as a pillar that protrudes and extends from the bottom portion 1023 and may be opposite to the first pin P1 with respect to the cable hole 1025.

The flange 1024 may be formed in a circumference of the bottom portion 1023. The flange 1024 may be referred to as a side skirt 1024. The flange 1024 may protrude outside the opening of the housing 1021 and may be located surrounding the bottom portion 1023, the pin P1, P2, and the cable hole 1025.

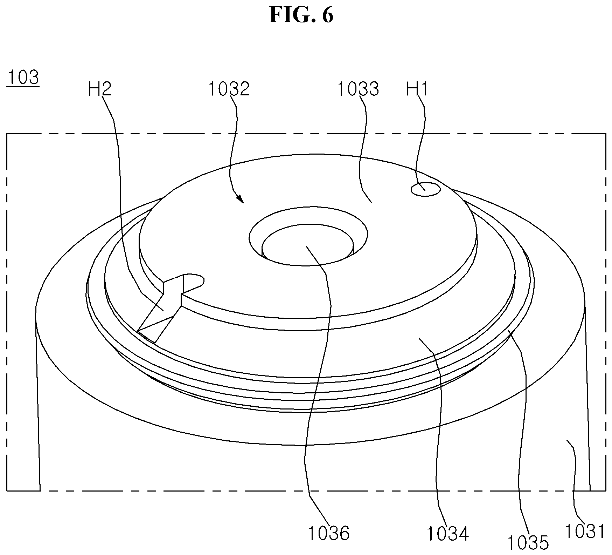

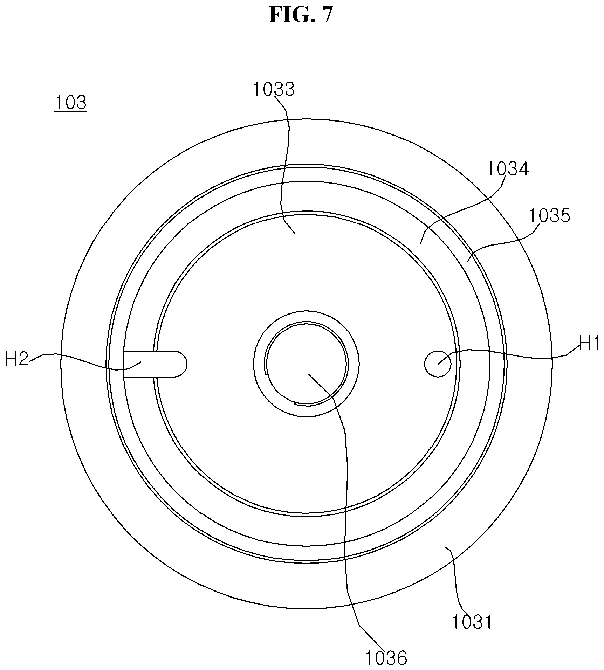

Referring to FIGS. 6 and 7, the third arm 103 may include a housing 1031 and a connecting mount 1032. The housing 1031 has a cylindrical shape, provides an accommodating space therein, and may form the outer surface of the third arm 103. The connecting mount 1032 may include a dome portion 1033, 1034, a flange 1035, a cable hole 1036, and a fixing groove H1, H2. The connecting mount 1032 may be inserted into one side opening of the housing 1031. The dome portion 1033, 1034 may protrude from one side opening of the housing 1031. The flange 1035 may be formed in a circumference of the dome portion 1033, 1034.

The flange 1035 may be referred to as a side skirt 1035. The dome portion 1033, 1034 may include a first surface 1033 and a second surface 1034. The first surface 1033 may have a disk-shape and may form the outer surface of the dome portion 1033, 1034. The cable hole 1036 may be formed to penetrate the center of the first surface 1033. The second surface 1034 may surround the first surface 1033 while forming a step that is lowered from the first surface 1033. The second surface 1034 may form an inclined surface 1034.

The fixing groove H1, H2 may be referred to as a connection groove H1, H2 or a guide groove H1, H2. The fixing groove H1, H2 may be located adjacent to the cable hole 1036, and may be formed by being recessed into the inside of the first surface 1033 and/or the second surface 1034. There may be a plurality of fixing grooves H1 and H2. The plurality of fixing grooves H1 and H2 may include a first fixing groove H1 and a second fixing groove H2. The first fixing groove H1 may be formed by being recessed into the inside of the first surface 1033. The second fixing groove H2 may be formed by being recessed into the inside of the first surface 1033 and the second surface 1034. For example, the first fixing groove H1 may be a circular hole, and the second fixing groove H2 may be a long hole. Accordingly, it is possible to respond to tolerances and provide clearance.

The second fixing groove H2 may be located across the step formed by the first surface 1033 and the second surface 1034. The location of the first fixing groove H1 corresponds to the location of the first pin P1, when the connecting mount 1022 of the second arm 102 and the connecting mount 1032 of the third arm 103 face each other. The location of the second fixing groove H2 corresponds to the location of the second pin P2, when the connecting mount 1022 of the second arm 102 and the connecting mount 1032 of the third arm 103 face each other.

Accordingly, when the second arm 102 and the third arm 103 are joined, the dome portion 1033, 1034 faces the bottom portion 1023, and the joining location of the second arm 102 may be aligned with the third arm 103 while the pins P1 and P2 are inserted into the fixing grooves H1 and H2. That is, it is possible not only to improve the convenience of assembly, but also to improve structural stability after joining.

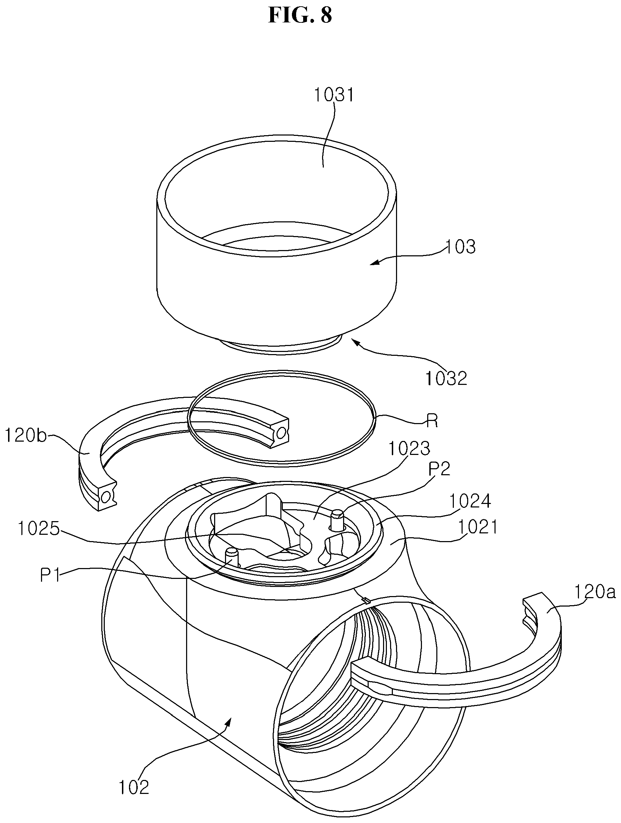

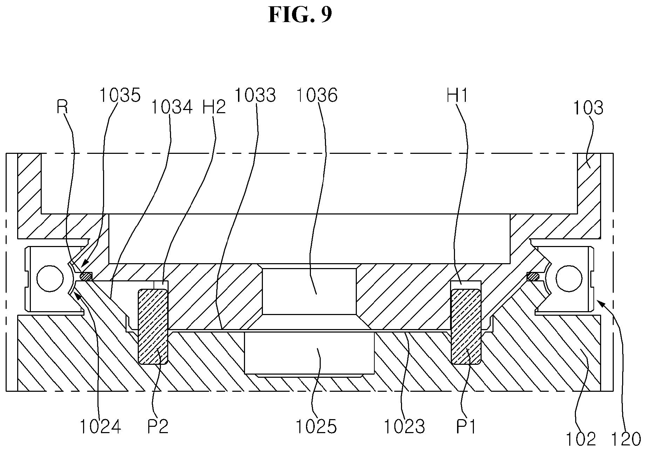

Referring to FIGS. 8 and 9, a sealing member R may be inserted into between the second arm 102 and the third arm 103. For example, the sealing member R may have a ring shape. The sealing member R may be inserted or press-fitted to between the flange 1024 of the second arm 102 and the flange 1035 of the third arm 103.

When the second arm 102 and the third arm 103 are joined to each other, the sealing member R may be located between the flange 1024 of the second arm 102 and the flange 1035 of the third arm 103. For example, the sealing member R may be an elastic material. For another example, the sealing member R may be rubber.

The joint block 120 may be fitted into the flange 1024 of the second arm 102 and the flange 1035 of the third arm 103. When the joint block 120 is joined to the second arm 102 and the third arm 103, the flange 1024 of the second arm 102 and the flange 1035 of the third arm 103 can become close to each other, and the sealing member R can be compressed. Accordingly, the convenience of assembly of the second arm 102 and the third arm 103 can be improved, and the dust and moisture proof can be improved.

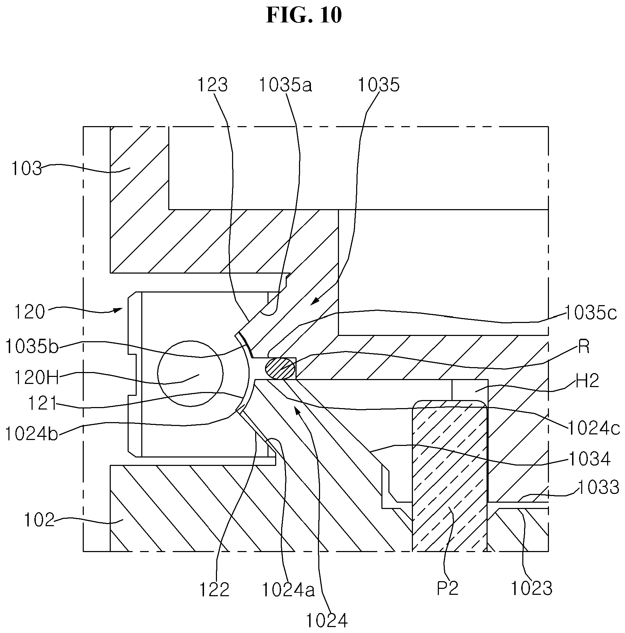

Referring to FIGS. 9 and 10, the flange 1024 of the second arm 102 may include a horizontal portion 1024c, an inclined portion 1024a, and a curved portion 1024b. The horizontal portion 1024c may face the flange 1035 of the third arm 103, and may form a step lowered from the bottom surface of the second fixing groove H2. The inclined portion 1024a may form an incline with respect to the horizontal portion 1024c. The inclined portion 1024a may form an acute angle with respect to the horizontal portion 1024c. The curved portion 1024b may connect the horizontal portion 1024c and the inclined portion 1024a, and form the outer circumference of the flange 1024. The curved portion 1024b may be concave to the inside of the flange 1024.

The flange 1035 of the third arm 103 may include a horizontal portion 1035c, an inclined portion 1035a, and a curved portion 1035b. The horizontal portion 1035c may face the horizontal portion 1024c of the flange 1024 of the second arm 102, and may form a surface parallel to the bottom surface of the second fixing groove H2. The horizontal portion 1035c of the flange 1035 of the third arm 103 may form a gap with the horizontal portion 1024c of the flange 1024 of the second arm 102. The inclined portion 1035a may form an incline with respect to the horizontal portion 1035c. The inclined portion 1035a may form an acute angle with respect to the horizontal portion 1035c. The curved portion 1035b may connect the horizontal portion 1035c and the inclined portion 1035a, and form the outer circumference of the flange 1035. The curved portion 1035b may be concave to the inside of the flange 1035.

The sealing member R may be located between the horizontal portion 1024c of the flange 1024 of the second arm 102 and the horizontal portion 1035c of the flange 1035 of the third arm 103. The joint block 120 may include a first inclined portion 122, a second inclined portion 123, and a curved portion 121. The first inclined portion 122 may be in contact with the inclined portion 1024a of the flange 1024 of the second arm 102. The second inclined portion 123 may be in contact with the inclined portion 1035a of the flange 1035 of the third arm 103. The curved portion 121 may face the curved portion 1024b of the flange 1024 of the second arm 102 and the curved portion 1035b of the flange 1035 of the third arm 103, and form a gap. As the joint block 120 is joined to the second arm 102 and the third arm 103, the flange 1024 of the second arm 102 and the flange 1035 of the third arm 103 may be firmly adhered closely to each other. The sealing member R may be compressed while the joint block 120 is joined. Accordingly, the dust-proof and moisture-proof ability of the joint portion of the second arm 102 and the third arm 103 can be improved.

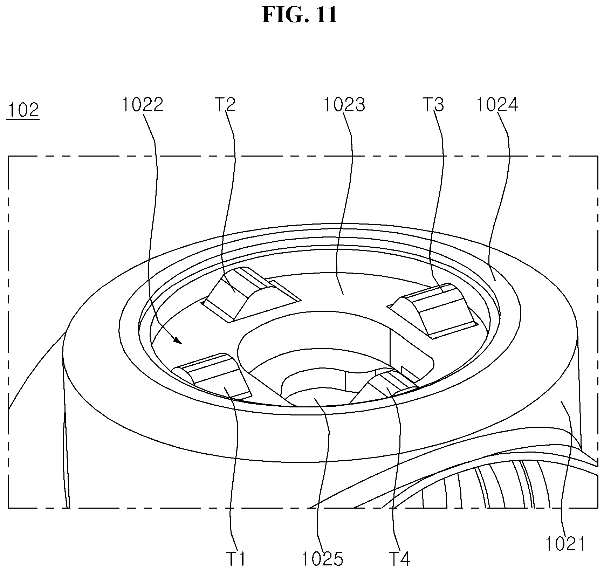

Referring to FIG. 11, the second arm 102 may include a housing 1021 and a connecting mount 1022. The housing 1021 may provide an accommodating space therein and form the outer surface of the second arm 102. The connecting mount 1022 may be inserted into one side opening of the housing 1021. The connecting mount 1022 may include a bottom portion 1023, a flange 1024, a protrusion T1, T2, T3, T4, and a cable hole 1025. The cable hole 1025 may be formed by penetrating the bottom portion 1023 at the center of the bottom portion 1023.

There may be a plurality of protrusions T1, T2, T3, and T4. The protrusion T1, T2, T3, T4 may be referred to as a fixing protrusion T1, T2, T3, T4 or a guide protrusion T1, T2, T3, T4. The plurality of protrusions T1, T2, T3, and T4 may include a first protrusion T1, a second protrusion T2, a third protrusion T3, and a fourth protrusion T4. The first protrusion T1 may protrude from the bottom portion 1023 while being adjacent to the cable hole 1025. The third protrusion T3 may protrude from the bottom portion 1023, and face the first protrusion T1 with respect to the cable hole 1025. The second protrusion T2 may protrude from the bottom portion 1023, and may be located between the first protrusion T1 and the third protrusion T3. The fourth protrusion T4 may protrude from the bottom portion 1023, and face the second protrusion T2 and the cable hole 1025. The fourth protrusion T4 may be located between the first protrusion T1 and the third protrusion T3.

The flange 1024 may be formed in a circumference of the bottom portion 1023. The flange 1024 may be referred to as a side skirt 1024. The flange 1024 may protrude outside of the opening of the housing 1021, and may be located surrounding the bottom portion 1023, the protrusion T1, T2, T3, T4, and the cable hole 1025.

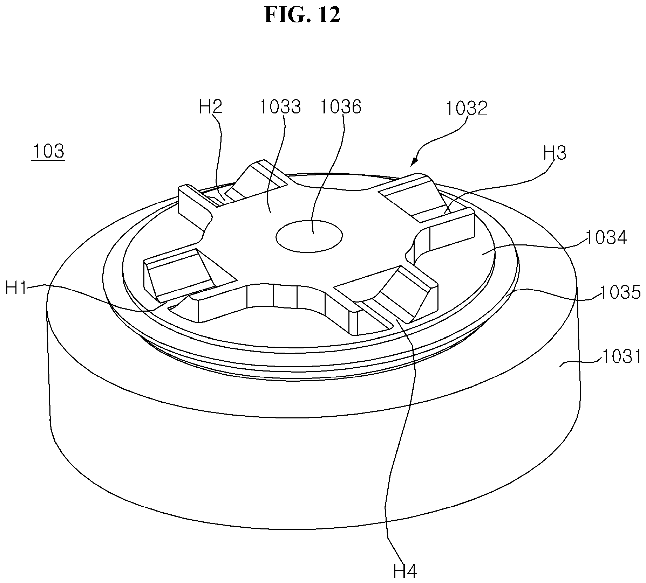

Referring to FIG. 12, the third arm 103 may include a housing 1031 and a connecting mount 1032. The housing 1031 may have a cylindrical shape, provide an accommodating space therein, and form the outer surface of the third arm 103. The connecting mount 1032 may include a dome portion 1033, 1034, a flange 1035, a cable hole 1036, and a fixing groove H1, H2, H3, H4. The connecting mount 1032 may be inserted into one side opening of the housing 1031. The dome portion 1033, 1034 may protrude from one side opening of the housing 1031. The flange 1035 may be formed in a circumference of the dome portion 1033, 1034.

The flange 1035 may be referred to as a side skirt 1035. The dome portion 1033, 1034 may include a first surface 1033 and a second surface 1034. The first surface 1033 may have a disk-shape, and may form the outer surface of the dome portion 1033, 1034. The cable hole 1036 may be formed to penetrate the center of the first surface 1033. The second surface 1034 may surround the first surface 1033 while forming a step that is lowered from the first surface 1033.

The fixing groove H1, H2, H3, H4 may be referred to as a connection groove H1, H2, H3, H4 or a guide groove H1, H2, H3, H4. The fixing groove H1, H2, H3, H4 may be located adjacent to the cable hole 1036, and may be formed by recessing from the first surface 1033 to the second surface 1034. There may be a plurality of fixing grooves H1, H2, H3, and H4. The plurality of fixing grooves H1, H2, H3, and H4 may include a first fixing groove H1, a second fixing groove H2, a third fixing groove H3, and a fourth fixing groove H4. The first fixing groove H1 may be opposite to the third fixing groove H3 with respect to the cable hole 1036, and the second fixing groove H2 may be opposite to the fourth fixing groove H4 with respect to the cable groove 1036.

The location of the first fixing groove H1 may correspond to the location of the first protrusion T1, when the connecting mount 1022 of the second arm 102 and the connecting mount 1032 of the third arm 103 face each other. The location of the second fixing groove H2 may correspond to the location of the second protrusion T2, when the connecting mount 1022 of the second arm 102 and the connecting mount 1032 of the third arm 103 face each other. The location of the third fixing groove H3 may correspond to the location of the third protrusion T3, when the connecting mount 1022 of the second arm 102 and the connecting mount 1032 of the third arm 103 face each other. The location of the fourth fixing groove H4 may correspond to the location of the fourth protrusion T4, when the connecting mount 1022 of the second arm 102 and the connecting mount 1032 of the third arm 103 face each other.

Accordingly, when the second arm 102 and the third arm 103 are joined, the dome portion 1033, 1034 faces the bottom portion 1023, and the joining location of the second arm 102 may be aligned with the third arm 103 while the protrusions T1, T2, T3, and T4 are inserted into the fixing grooves H1, H2, H3, and H4. That is, it is possible not only to improve the convenience of assembly, but also to improve structural stability after joining.

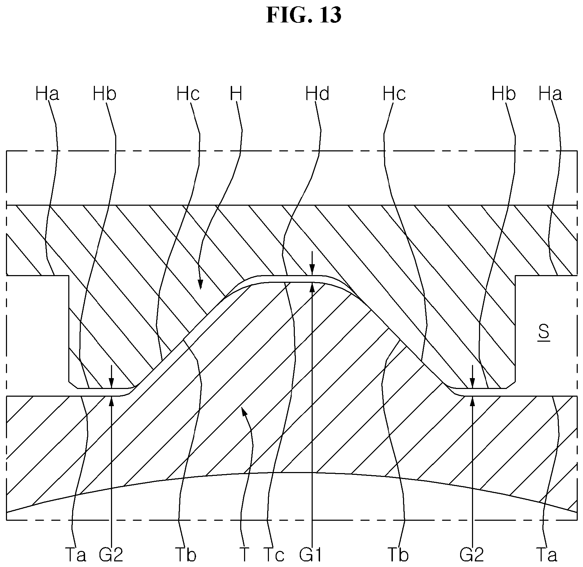

Referring to FIG. 13, the protrusion T may protrude from the bottom portion Ta 1023. The protrusion T may form a gentle incline and protrude convexly from the bottom portion Ta. The protrusion T may include a top portion Tc and an inclined portion Tb. The protrusion T may have an overall trapezoidal cross-section. The inclined portions Tb may be symmetrical with respect to the top portion Tc.

The fixing groove H may be formed on the dome portion Ha 1034. The fixing groove H may have an overall crater shape. The fixing groove H may accommodate the protrusion T. The fixing groove H may include a lower portion Hd, a side portion Hc, and an upper portion Hb. The height of the lower portion Hd may be substantially the same as the height of the dome portion Ha. The side portion Hc may form a slope that increases from the lower portion Hd. The upper portion Hb may extend from the side portion Hc to form a step with the dome portion Ha.

The protrusion T may be inserted into the fixing groove H. The top portion Tc of the protrusion T may face the lower portion Hd of the fixing groove H. A first gap G1 may be formed between the top portion Tc of the protrusion T and the lower portion Hd of the fixing groove H. The inclined portion Tb of the protrusion T may face the side portion Hc of the fixing groove H. The inclined portion Tb of the protrusion T may be in contact with the side portion Hc of the fixing groove H. The upper portion Hb of the fixing groove H may face the bottom portion Ta. A second gap G2 may be formed between the upper portion Hb and the bottom portion Ta of the fixing groove H.

Accordingly, when the arms are joined, bias does not occur and the arms can be aligned in a correct location without clearance so that arms can be joined.

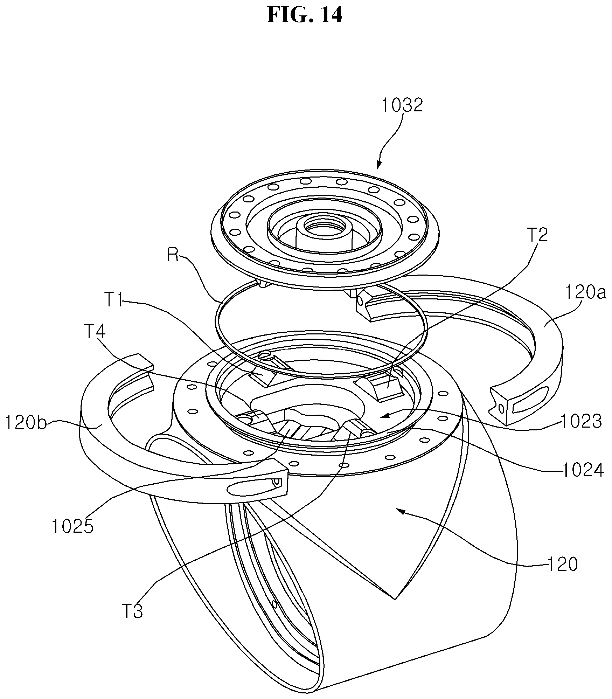

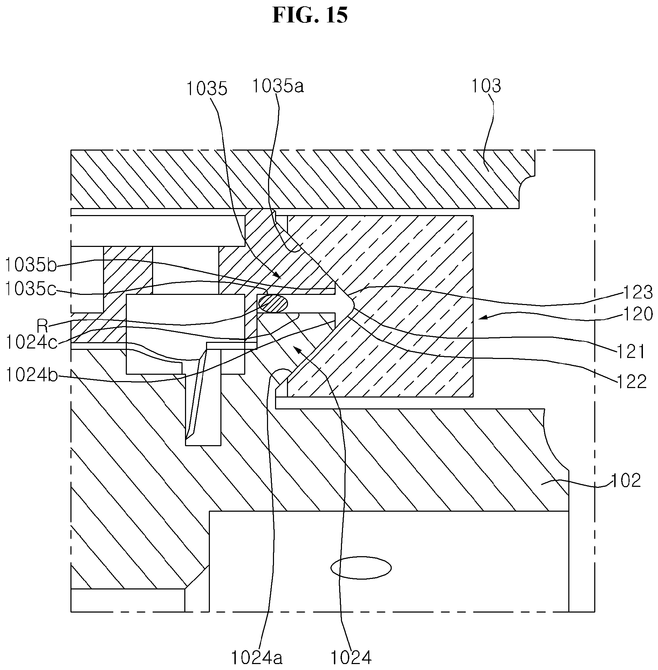

Referring to FIGS. 14 and 15, the sealing member R may be inserted into between the second arm 102 and the third arm 103. For example, the sealing member R may have a ring shape. The sealing member R may be inserted or press-fitted to between the flange 1024 of the second arm 102 and the flange 1035 of the third arm 103.

When the second arm 102 and the third arm 103 are joined to each other, the sealing member R may be located between the flange 1024 of the second arm 102 and the flange 1035 of the third arm 103. For example, the sealing member R may be an elastic material. For another example, the sealing member R may be rubber.

The joint block 120 may be fitted into the flange 1024 of the second arm 102 and the flange 1035 of the third arm 103. When the joint block 120 is joined to the second arm 102 and the third arm 103, the flange 1024 of the second arm 102 and the flange 1035 of the third arm 103 can become close to each other, and the sealing member R can be compressed. Accordingly, the convenience of assembly of the second arm 102 and the third arm 103 can be improved, and the dust and moisture proof can be improved.

The flange 1024 of the second arm 102 may include a horizontal portion 1024c, an inclined portion 1024a, and a side portion 1024b. The horizontal portion 1024c may face the flange 1035 of the third arm 103. The inclined portion 1024a may form an incline with respect to the horizontal portion 1024c. The inclined portion 1024a may form an acute angle with respect to the horizontal portion 1024c. The side portion 1024b may connect the horizontal portion 1024c and the inclined portion 1024a, and form the outer circumference of the flange 1024.

The flange 1035 of the third arm 103 may include a horizontal portion 1035c, an inclined portion 1035a, and a side portion 1035b. The horizontal portion 1035c may face the horizontal portion 1024c of the flange 1024 of the second arm 102. The horizontal portion 1035c of the flange 1035 of the third arm 103 may form a gap with the horizontal portion 1024c of the flange 1024 of the second arm 102. The inclined portion 1035a may form an incline with respect to the horizontal portion 1035c. The inclined portion 1035a may form an acute angle with respect to the horizontal portion 1035c. The side portion 1035b may connect the horizontal portion 1035c and the inclined portion 1035a, and form the outer circumference of the flange 1035.

The sealing member R may be located between the horizontal portion 1024c of the flange 1024 of the second arm 102 and the horizontal portion 1035c of the flange 1035 of the third arm 103. The joint block 120 may include a first inclined portion 122, a second inclined portion 123, and a curved portion 121. The first inclined portion 122 may be in contact with the inclined portion 1024a of the flange 1024 of the second arm 102. The second inclined portion 123 may be in contact with the inclined portion 1035a of the flange 1035 of the third arm 103. The curved portion 121 may form a gap from the flange portions 1024 and 1035. As the joint block 120 is joined to the second arm 102 and the third arm 103, the flange 1024 of the second arm 102 and the flange 1035 of the third arm 103 can be firmly adhered closely to each other. The sealing member R may be compressed when the joint block 120 is joined. Accordingly, the dust-proof and moisture-proof ability of the joint portion of the second arm 102 and the third arm 103 can be improved.

Referring to FIGS. 1 to 15, the robot includes: a first arm 102; a second arm 103 configured to be rotatably joined to the first arm 102; a sealing member R configured to be located between the first arm 102 and the second arm 103; and a joint block 120 configured to cover the sealing member R, and join the first arm 102 to the second arm 103, in which the first arm 102 includes: a first housing 1021 which provides an accommodating space therein and has one side open; and a first connecting mount 1022 which is accommodated in the first housing 1021 and located in an opening of the first housing 1021, in which the second arm 103 includes: a second housing 1031 which provides an accommodating space therein and has one side open; and a second connecting mount 1032 which is accommodated in the second housing 1031 and joined to the first connecting mount 1022 at an opening of the second housing 1031, in which the sealing member R is fitted to between the first connecting mount 1022 and the second connecting mount 1032, in which the joint block 120 is engaged with the first connecting mount 1022 and the second connecting mount 1032.

The first connecting mount 1022 includes: a bottom portion 1023 facing the second connecting mount 1032; a cable hole 1025 penetrating a center of the bottom portion 1023; and a plurality of pins P1 and P2 which are located adjacent to the cable hole 1025 and protrude from the bottom portion 1023, in which the second connecting mount 1032 includes: a dome portion 1033, 1034 facing the bottom portion 1023; a cable hole 1036 penetrating a center of the dome portion 1033, 1034; and a plurality of fixing grooves H1 and H2 which are formed in a location corresponding to the plurality of pins P1 and P2, and recessed in the dome portion 1033, 1034, in which the plurality of pins P1 and P2 are inserted into the plurality of fixing grooves H1 and H2.

One of the plurality of fixing grooves H1 and H2 is an elongated hole.

The first connecting mount 1022 further includes a first flange 1024 formed in a circumference of the bottom portion 1023, the second connecting mount 1032 further includes a second flange 1035 which is formed in a circumference of the dome portion 1033, 1034 and faces the first flange 1024, and the joint block 120 is joined to the first flange 1024 and the second flange 1035.

The sealing member R is inserted into between the first flange 1024 and the second flange 1035.

The first flange 1024 includes: a horizontal portion 1024c on which the sealing member R is placed; an inclined portion 1024a forming an acute angle with respect to the horizontal portion 1024c; and a curved portion 1024b connecting the horizontal portion 1024c and the inclined portion 1024a, in which the second flange 1035 includes: a horizontal portion 1035c which faces the horizontal portion 1024c of the first flange 1024, and is in close contact with the sealing member R; an inclined portion 1035a forming an acute angle with respect to the horizontal portion 1035c; and a curved portion 1035b connecting the horizontal portion 1035c and the inclined portion 1035a, in which the joint block 120 is in contact with the inclined portion 1024a of the first flange 1024 and the inclined portion 1035a of the second flange 1035.

The first connecting mount 1022 includes: a bottom portion 1023 facing the second connecting mount 1032; a cable hole 1025 penetrating a center of the bottom portion 1023; and a plurality of protrusions T which are located adjacent to the cable hole 1025 and protrude from the bottom portion 1023, in which the second connecting mount 1032 includes: a dome portion 1033, 1034 facing the bottom portion 1023; a cable hole 1036 penetrating a center of the dome portion 1033, 1034; and a plurality of fixing grooves H which are formed in a location corresponding to the plurality of protrusions T, and are recessed in the dome portion 1033, 1034, in which the plurality of protrusions T are inserted into the plurality of fixing grooves H.

The protrusion includes: a first inclined portion Tb which extends from the bottom portion 1023, and forms an incline with respect to the bottom portion 1023; a top portion Tc which is connected to the first inclined portion Tb and forms a height of the protrusion T; and a second inclined portion Tb which connects the bottom portion 1023 from the top portion Tc, and is opposite to the first inclined portion Tb with respect to the top portion Tc, in which the fixing groove H includes: a first side portion Hc in contact with the first inclined portion Tb of the protrusion T; a second side portion Hc in contact with the second inclined portion Tb of the protrusion T; and a lower portion Hd spaced apart from the top portion Tc of the protrusion T to form a gap G1.

The fixing groove H further includes an upper portion which is connected to the first side portion Hc and the second side portion Hc and forms a circumference of the fixing groove H, in which the upper portion of the fixing groove H is spaced apart from the bottom portion 1023 to form a gap G2.

The first connecting mount 1022 further includes a first flange 1024 formed in a circumference of the bottom portion 1023, the second connecting mount 1032 further includes a second flange 1035 which is formed in a circumference of the dome portion 1033, 1034 and faces the first flange 1024, and the joint block 120 is joined to the first flange 1024 and the second flange 1035.

The sealing member R is inserted into between the first flange 1024 and the second flange 1035.

The first flange 1024 includes: a horizontal portion 1024c on which the sealing member R is placed; an inclined portion 1024a forming an acute angle with respect to the horizontal portion 1024c; and a side portion 1024b connecting the horizontal portion 1024c and the inclined portion 1024a, in which the second flange 1035 includes: a horizontal portion 1035c which faces the horizontal portion 1024c of the first flange 1024, and is in close contact with the sealing member R; an inclined portion 1035a forming an acute angle with respect to the horizontal portion 1035c; and a side portion 1035b connecting the horizontal portion 1035c and the inclined portion 1035a, in which the joint block 120 is in contact with the inclined portion 1024a of the first flange 1024 and the inclined portion 1035a of the second flange 1035.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A robot (10) comprising:
a first arm (102);
a second arm (103) rotatably coupled to the first arm;
a sealing member (R) located between the first arm and the second arm; and
a joint block (120) covering the sealing member, and coupling the first arm with the second arm,
wherein the first arm comprises:
a first housing (1021) providing an accommodating space and including one side open; and
a first connecting mount (1022) accommodated in the first housing and located at an opening of the first housing,
wherein the second arm comprises:
a second housing (1031) providing an accommodating space and including one side open; and
a second connecting mount (1032) accommodated in the second housing and joined to the first connecting mount at an opening of the second housing,
wherein the sealing member is inserted between the first connecting mount and the second connecting mount,
wherein the joint block is engaged with the first connecting mount and the second connecting mount.

2. The robot of claim 1, wherein the first connecting mount comprises:
a bottom portion facing the second connecting mount;
a cable hole penetrating a center of the bottom portion; and
a plurality of pins located adjacent to the cable hole and protruded from the bottom portion,
wherein the second connecting mount comprises:
a dome portion facing the bottom portion;
a cable hole penetrating a center of the dome portion; and
a plurality of fixing grooves formed in a location corresponding to the plurality of pins, and recessed into the dome portion,
wherein the plurality of pins is inserted into the plurality of fixing grooves.

3. The robot of claim 2, wherein one of the plurality of fixing grooves is an elongated hole.

4. The robot of claim 2, wherein the first connecting mount further comprises a first flange formed at a circumference of the bottom portion,
wherein the second connecting mount further comprises a second flange formed at a circumference of the dome portion and facing the first flange,
wherein the joint block is coupled to the first flange and the second flange.

5. The robot of claim 4, wherein the sealing member is inserted between the first flange and the second flange.

6. The robot of claim 5, wherein the first flange comprises:
a horizontal portion on which the sealing member is disposed;
an inclined portion forming an acute angle with respect to the horizontal portion; and
a curved portion connecting the horizontal portion and the inclined portion,
wherein the second flange comprises:
a horizontal portion facing the horizontal portion of the first flange, and being in contact with the sealing member;
an inclined portion forming an acute angle with respect to the horizontal portion; and
a curved portion connecting the horizontal portion and the inclined portion,
wherein the joint block is in contact with the inclined portion of the first flange and the inclined portion of the second flange.

7. The robot of claim 1, wherein the first connecting mount comprises:
a bottom portion facing the second connecting mount;
a cable hole penetrating a center of the bottom portion; and
a plurality of protrusions located adjacent to the cable hole and protruded from the bottom portion,
wherein the second connecting mount comprises:
a dome portion facing the bottom portion;
a cable hole penetrating a center of the dome portion; and
a plurality of fixing grooves formed at a location corresponding to the plurality of protrusions, and recessed into the dome portion,
wherein the plurality of protrusions is inserted into the plurality of fixing grooves.

8. The robot of claim 7, wherein the protrusion comprises:
a first inclined portion extended from the bottom portion, and forming an incline with respect to the bottom portion;
a top portion connected to the first inclined portion and forming a height of the protrusion; and
a second inclined portion connected the bottom portion with the top portion, and being opposite to the first inclined portion with respect to the top portion,
wherein the fixing groove comprises:
a first side portion in contact with the first inclined portion of the protrusion;
a second side portion in contact with the second inclined portion of the protrusion; and
a lower portion spaced apart from the top portion of the protrusion with a gap.

9. The robot of claim 8, wherein the fixing groove further comprises an upper portion connected to the first side portion and the second side portion, and forming a circumference of the fixing groove,
wherein the upper portion of the fixing groove is spaced apart from the bottom portion with a gap.

10. The robot of claim 7, wherein the first connecting mount further comprises a first flange formed at a circumference of the bottom portion,
wherein the second connecting mount further comprises a second flange formed at a circumference of the dome portion and facing the first flange,
wherein the joint block is coupled to the first flange and the second flange.

11. The robot of claim 10, wherein the sealing member is inserted between the first flange and the second flange.

12. The robot of claim 11, wherein the first flange comprises:
a horizontal portion on which the sealing member is disposed;
an inclined portion forming an acute angle with respect to the horizontal portion; and
a side portion connecting the horizontal portion and the inclined portion,
wherein the second flange comprises:
a horizontal portion facing the horizontal portion of the first flange, and being in contact with the sealing member;
an inclined portion forming an acute angle with respect to the horizontal portion; and
a side portion connecting the horizontal portion and the inclined portion,
wherein the joint block is in contact with the inclined portion of the first flange and the inclined portion of the second flange.

## Patentansprüche

1. Roboter (10) umfassend:
einen ersten Arm (102);
einen zweiten Arm (103), der drehbar mit dem ersten Arm verbunden ist;
ein Dichtungselement (R), das zwischen dem ersten Arm und dem zweiten Arm angeordnet ist; und
einen Verbindungsblock (120), der das Dichtungselement abdeckt und den ersten Arm mit dem zweiten Arm verbindet,
wobei der erste Arm umfasst:
ein erstes Gehäuse (1021), das einen Aufnahmeraum bereitstellt und eine offene Seite aufweist; und
eine erste Verbindungshalterung (1022), die in dem ersten Gehäuse untergebracht ist und an einer Öffnung des ersten Gehäuses angeordnet ist,
wobei der zweite Arm umfasst:
ein zweites Gehäuse (1031), das einen Aufnahmeraum bereitstellt und eine offene Seite aufweist; und
eine zweite Verbindungshalterung (1032), die in dem zweiten Gehäuse untergebracht ist und mit der ersten Verbindungshalterung an einer Öffnung des zweiten Gehäuses verbunden ist,
wobei das Dichtungselement zwischen der ersten Verbindungshalterung und der zweiten Verbindungshalterung eingesetzt ist,
wobei der Verbindungsblock mit der ersten Verbindungshalterung und der zweiten Verbindungshalterung in Eingriff steht.

2. Roboter nach Anspruch 1, wobei die erste Verbindungshalterung umfasst:
einen Bodenabschnitt, der der zweiten Verbindungshalterung zugewandt ist;
eine Kabelöffnung, die die Mitte des Bodenabschnitts durchdringt; und
eine Mehrzahl von Stiften, die benachbart zu der Kabelöffnung angeordnet sind und aus dem unteren Abschnitt herausragen,
wobei die zweite Verbindungshalterung umfasst:
einen dem Bodenabschnitt zugewandten Kuppelabschnitt;
eine Kabelöffnung, die die Mitte des Kuppelabschnitts durchdringt; und
eine Mehrzahl von Befestigungsnuten, die an einer Stelle ausgebildet sind, die der Mehrzahl von Stiften entspricht, und in den Kuppelabschnitt eingelassen sind,
wobei die Mehrzahl von Stiften in die Mehrzahl von Befestigungsnuten eingesetzt sind.

3. Roboter nach Anspruch 2, wobei eine der Mehrzahl von Befestigungsnuten ein Langloch ist.

4. Roboter nach Anspruch 2, wobei die erste Verbindungshalterung ferner einen ersten Flansch umfasst, der an einem Umfang des Bodenabschnitts ausgebildet ist,
wobei die zweite Verbindungshalterung ferner einen zweiten Flansch umfasst, der an einem Umfang des Kuppelabschnitts ausgebildet ist und dem ersten Flansch gegenüberliegt,
wobei der Verbindungsblock mit dem ersten Flansch und dem zweiten Flansch verbunden ist.

5. Roboter nach Anspruch 4, wobei das Dichtungselement zwischen dem ersten Flansch und dem zweiten Flansch eingesetzt ist.

6. Roboter nach Anspruch 5, wobei der erste Flansch umfasst:
einen horizontalen Abschnitt, auf dem das Dichtungselement angeordnet ist;
einen geneigten Abschnitt, der in Bezug auf den horizontalen Abschnitt einen spitzen Winkel bildet; und
einen gekrümmten Abschnitt, der den horizontalen Abschnitt und den geneigten Abschnitt verbindet,
wobei der zweite Flansch umfasst:
einen horizontalen Abschnitt, der dem horizontalen Abschnitt des ersten Flansches zugewandt ist und mit dem Dichtungselement in Kontakt steht;
einen geneigten Abschnitt, der einen spitzen Winkel in Bezug auf den horizontalen Abschnitt bildet; und
einen gekrümmten Abschnitt, der den horizontalen Abschnitt und den geneigten Abschnitt verbindet,
wobei der Verbindungsblock mit dem geneigten Abschnitt des ersten Flansches und dem geneigten Abschnitt des zweiten Flansches in Kontakt steht.

7. Roboter nach Anspruch 1, wobei die erste Verbindungshalterung umfasst:
einen unteren Abschnitt, der der zweiten Verbindungshalterung zugewandt ist;
eine Kabelöffnung, die die Mitte des Bodenabschnitts durchdringt; und
eine Mehrzahl von Vorsprüngen, die sich neben der Kabelöffnung befinden und aus dem Bodenabschnitt herausragen,
wobei die zweite Verbindungshalterung umfasst:
einen dem Bodenabschnitt zugewandten Kuppelabschnitt;
eine Kabelöffnung, die die Mitte des Kuppelabschnitts durchdringt; und
eine Mehrzahl von Befestigungsnuten, die an einer Stelle ausgebildet sind, die der Mehrzahl von Vorsprüngen entspricht, und die in den Kuppelabschnitt eingelassen sind,
wobei die Mehrzahl von Vorsprüngen in die Mehrzahl von Befestigungsnuten eingesetzt sind.

8. Roboter nach Anspruch 7, wobei der Vorsprung umfasst:
einen ersten geneigten Abschnitt, der sich von dem Bodenabschnitt erstreckt und eine Neigung in Bezug auf den Bodenabschnitt bildet;
einen Deckenabschnitt, der mit dem ersten geneigten Abschnitt verbunden ist und eine Höhe des Vorsprungs bildet; und
einen zweiten geneigten Abschnitt, der den Bodenabschnitt mit dem Deckenabschnitt verbindet und in Bezug auf den Deckenabschnitt dem ersten geneigten Abschnitt gegenüberliegt,
wobei die Befestigungsnut umfasst:
einen ersten Seitenabschnitt, der mit dem ersten geneigten Abschnitt des Vorsprungs in Kontakt steht;
einen zweiten Seitenabschnitt, der mit dem zweiten geneigten Abschnitt des Vorsprungs in Kontakt steht; und
einen unteren Abschnitt, der beabstandet von dem Deckenabschnitt des Vorsprungs angeordnet ist.

9. Roboter nach Anspruch 8, wobei die Befestigungsnut ferner einen oberen Abschnitt umfasst, der mit dem ersten Seitenabschnitt und dem zweiten Seitenabschnitt verbunden ist und einen Umfang der Befestigungsnut bildet,
wobei der obere Abschnitt der Befestigungsnut mit einem Spalt von dem Bodenabschnitt beabstandet ist.

10. Roboter nach Anspruch 7, wobei die erste Verbindungshalterung ferner einen ersten Flansch umfasst, der an einem Umfang des Bodenabschnitts ausgebildet ist,
wobei die zweite Verbindungshalterung ferner einen zweiten Flansch umfasst, der an einem Umfang des Kuppelabschnitts ausgebildet ist und dem ersten Flansch gegenüberliegt,
wobei der Verbindungsblock mit dem ersten Flansch und dem zweiten Flansch verbunden ist.

11. Roboter nach Anspruch 10, wobei das Dichtungselement zwischen dem ersten Flansch und dem zweiten Flansch eingesetzt ist.

12. Roboter nach Anspruch 11, wobei der erste Flansch umfasst:
einen horizontalen Abschnitt, auf dem das Dichtungselement angeordnet ist;
einen geneigten Abschnitt, der einen spitzen Winkel in Bezug auf den horizontalen Abschnitt bildet; und
einen Seitenabschnitt, der den horizontalen Abschnitt und den geneigten Abschnitt verbindet,
wobei der zweite Flansch umfasst:
einen horizontalen Abschnitt, der dem horizontalen Abschnitt des ersten Flansches zugewandt ist und mit dem Dichtungselement in Kontakt steht;
einen geneigten Abschnitt, der einen spitzen Winkel in Bezug auf den horizontalen Abschnitt bildet; und
einen Seitenabschnitt, der den horizontalen Abschnitt und den geneigten Abschnitt verbindet,
wobei der Verbindungsblock mit dem geneigten Abschnitt des ersten Flansches und dem geneigten Abschnitt des zweiten Flansches in Kontakt steht.

## Revendications

1. Robot (10) comprenant:
un premier bras (102);
un second bras (103) couplé en rotation avec le premier bras;
un élément d'étanchéité (R) situé entre le premier bras et le second bras; et
un bloc articulé (120) recouvrant l'élément d'étanchéité, et reliant le premier bras au second bras,
dans lequel le premier bras comprend:
un premier boîtier (1021) fournissant un espace de logement et comprenant une ouverture latérale; et
un premier support de connexion (1022) logé dans le premier boîtier et situé au niveau d'une ouverture du premier boîtier,
dans lequel le second bras comprend:
un second boîtier (1031) fournissant un espace de logement et comprenant une ouverture latérale; et
un second support de connexion (1032) logé dans le second boîtier et assemblé au premier support de connexion au niveau d'une ouverture du second boîtier,
dans lequel l'élément d'étanchéité est inséré entre le premier support de connexion et le second support de connexion,
dans lequel le bloc articulé vient en prise avec le premier support de connexion et le second support de connexion.

2. Robot selon la revendication 1, dans lequel le premier support de connexion comprend:
une partie fond faisant face au second support de connexion;
un trou pour câble entrant au centre de la partie fond; et
une pluralité de tiges adjacentes au trou pour câble et faisant saillie de la partie fond,
dans lequel le deuxième support de connexion comprend:
une partie dôme faisant face à la partie fond;
un trou pour câble entrant au centre de la partie dôme; et
une pluralité de rainures de fixation dans un emplacement correspondant à la pluralité de tiges, et en retrait dans la partie dôme,
dans lequel la pluralité de tiges est insérée dans la pluralité de rainures de fixation.

3. Robot selon la revendication 2, dans lequel l'une parmi la pluralité de rainures de fixation est un trou allongé.

4. Robot selon la revendication 2, dans lequel le premier support de connexion comprend en outre un premier rebord formé sur la circonférence de la partie fond,
dans lequel le second support de connexion comprend en outre une seconde tige formée sur la circonférence de la partie dôme et faisant face au premier rebord,
dans lequel le bloc articulé est accouplé au premier rebord et au second rebord.

5. Robot selon la revendication 4, dans lequel l'élément d'étanchéité est inséré entre le premier rebord et le second rebord.

6. Robot selon la revendication 5, le premier rebord comprenant:
une partie horizontale sur laquelle repose l'élément d'étanchéité;
une partie inclinée formant un angle aiguë par rapport à la partie horizontale; et
une partie incurvée reliant la partie horizontale et la partie inclinée,
dans lequel le second rebord comprend:
une partie horizontale faisant face à la partie horizontale du premier rebord, et étant en contact avec l'élément d'étanchéité;
une partie inclinée formant un angle aiguë par rapport à la partie horizontale; et
une partie incurvée reliant la partie horizontale et la partie inclinée,
dans lequel le bloc articulé est en contact avec la partie inclinée du premier rebord et avec la partie inclinée du second rebord.

7. Robot selon la revendication 1, dans lequel le premier support de connexion comprend:
une partie fond faisant face au second support de connexion;
un trou pour câble entrant au centre de la partie fond; et
une pluralité de saillies adjacentes au trou pour câble et faisant saillie de la partie fond,
dans lequel le deuxième support de connexion comprend:
une partie dôme faisant face à la partie fond;
un trou pour câble entrant au centre de la partie dôme; et
une pluralité de rainures de fixation dans un emplacement correspondant à la pluralité de tiges, et en retrait dans la partie dôme,
dans lequel la pluralité de tiges est insérée dans la pluralité de rainures de fixation.

8. Robot selon la revendication 7, dans lequel la saillie comprend:
une première partie inclinée qui s'étend de la partie fond, et forme une pente par rapport à la partie fond;
une partie supérieure reliée à la première partie inclinée et formant une hauteur de la saillie; et
une seconde partie inclinée reliée à la partie fond avec la partie supérieure, et en regard de la première partie inclinée par rapport à la partie supérieure,
dans lequel la rainure de fixation comprend:
une première partie latérale en contact avec la première partie inclinée de la saillie;
une seconde partie latérale en contact avec la seconde partie inclinée de la saillie; et
une partie inférieure séparée de la partie supérieure de la saillie par un espace.

9. Robot selon la revendication 8, dans lequel la rainure de fixation comprend en outre une partie supérieure reliée à la première partie latérale et à la seconde partie latérale, et formant une circonférence de la rainure de fixation,
dans lequel la partie supérieure de la rainure de fixation est séparée de la partie fond par un espace.

10. Robot selon la revendication 7, dans lequel le premier support de connexion comprend en outre un premier rebord formé sur la circonférence de la partie fond,
dans lequel le second support de connexion comprend en outre une seconde tige formée sur la circonférence de la partie dôme et faisant face au premier rebord,
dans lequel le bloc articulé est accouplé au premier rebord et au second rebord.

11. Robot selon la revendication 10, dans lequel l'élément d'étanchéité est inséré entre le premier rebord et le second rebord.

12. Robot selon la revendication 11, le premier rebord comprenant:
une partie horizontale sur laquelle repose l'élément d'étanchéité;
une partie inclinée formant un angle aiguë par rapport à la partie horizontale; et
une partie latérale reliant la partie horizontale et la partie inclinée,
dans lequel le second rebord comprend:
une partie horizontale faisant face à la partie horizontale du premier rebord, et étant en contact avec l'élément d'étanchéité;
une partie inclinée formant un angle aiguë par rapport à la partie horizontale; et
une partie latérale reliant la partie horizontale et la partie inclinée,
dans lequel le bloc articulé est en contact avec la partie inclinée du premier rebord et avec la partie inclinée du second rebord.
